# EUROPEAN PATENT SPECIFICATION

(11) **EP 2 763 887 B1**
(45) Date of publication and mention of the grant of the patent: **12.04.2017**
(21) Application number: 12795321.4
(22) Date of filing: 02.10.2012
(51) Int. Cl.: B62D 35/00, B62D 35/02, B62D 37/02

(54) **VEHICLE WITH LATERAL FORCE GENERATION**
FAHRZEUG MIT SEITLICHER KRAFTERZEUGUNG
VÉHICULE GÉNÉRANT UNE FORCE LATÉRALE

(30) Priority: 06.10.2011 BE 201100586
(43) Date of publication of application: 13.08.2014
(73) Proprietor: Voxdale BVBA, 2110 Wijnegem (BE)
(72) Inventor: REMMERIE, Wouter, Renaat, Joël, 2600 Berchem (BE)
(74) Representative: Philippaerts, Yannick
(86) International application number: PCT/BE2012/000045
(87) International publication number: WO 2013/049900

(56) References cited:
- DE-U1-202010 010 586
- JP-A- 2010 254 023
- US-A- 3 662 702

## Description

The invention relates to a vehicle designed to enable a high cornering speed.

Solutions have long been sought for absorbing the lateral forces when taking bends, particularly of vehicles at high speeds. A first way is to create downforce in order to exert more pressure on the ground surface. Due to the downward pressure the tyres will be subjected to a higher contact pressure on the ground surface, whereby greater shear forces can be absorbed. Such a solution is described in EP 0467523.

A drawback of generating downforce is that the load on drive components such as axles, tyres, bearings, suspension, suspension system and the like is higher. These parts hereby have to be given a heavier construction to be able to withstand the higher load, this having an adverse effect on the total weight of the vehicle. The higher load further causes more rapid wear of the components, which has an adverse effect in respect of maintenance costs and reliability.

These problems are acknowledged in the prior art, and different solutions have been devised which are described in US 2976077, DE 2838998, WO 2009/129632, US 3512825, GB 713277 and GB 2270658. Each of these documents describes how wing elements are arranged on the outside of the bodywork of the vehicle. A lateral force can be generated on the vehicle by operating these wing elements. This lateral force, which is generated by the wing elements, no longer has to be absorbed by the tyres when a bend is negotiated. The cornering speed can hereby be increased while the load on the tyres, and consequently on the drive components, is reduced.

Placing wing elements on the outside of the bodywork is usually not permitted for safety reasons, whereby these solutions cannot be applied in practice.

A further solution for enabling higher cornering speeds is described in AT 406140. This document describes how the airflow under a car can be guided and accelerated in order to obtain more downward pressure, and thereby stability. This takes place by bending walls of a channel, so changing the shape of the channel.

A drawback to this solution is the mechanical complexity necessary to bend the walls and to absorb forces exerted on the walls. This mechanical complexity makes this solution expensive and not very reliable.

Another solution for creating a dynamic airflow around a bodywork of a vehicle is known from DE202010010586U1.

It is an object of the invention to provide a bodywork for a vehicle which allows high cornering speeds.

Provided for this purpose is a vehicle with a bodywork, wherein a channel is formed in the bodywork which extends from an inlet to an outlet, wherein at least one control element is arranged movably in said channel in order to force an airflow flowing through the channel to flow asymmetrically through the channel in order to thus generate a lateral force on the vehicle. Having an airflow flow through a channel greatly increases the controllability of this airflow. Causing a change in the direction of this airflow creates a roughly asymmetrical flow pattern which generates a lateral force on the vehicle. This lateral force can be controlled due to the movability of the control element. The lateral force can be employed to counteract at least a part of centrifugal forces which result when negotiating a bend. A higher cornering speed can hereby be achieved by the vehicle.

The inlet is preferably formed by at least one opening at the front side of the bodywork, more preferably in the front side of the bodywork. Placing the inlet on the front side will cause an airflow to flow through the channel as a result of a forward movement of the vehicle. This airflow can be forced by the control element to flow asymmetrically through the channel, thereby creating the lateral force.

The channel is preferably branched, wherein the outlet is formed by two outlet openings in opposite sides of the bodywork, wherein the airflow is forced to flow more through one of the two outlet openings than through the other of the two outlet openings. The airflow leaves the bodywork on the side of the bodywork. A lateral force is generated in that the airflow passes through a bend from the inlet opening located on the front side to the outlet openings located on the side walls. The air flowing out of the side will further influence the airflow around the car on that side of the car, whereby the air adjacent to that side will flow more quickly or more slowly. According to Bernoulli's principle, changing the speed of the air results in a change in pressure. A force will act on the outside of the bodywork on that side of the car, thereby creating a lateral force.

The control element is preferably arranged at the position of a branching in the channel. A control element can be arranged at a branching in order to distribute the airflow equally between two branches or to guide more of or the whole airflow in the direction of the one or the other branch. Placing the control element at the position of the branching allows a simple mechanical control with high precision.

The channel is preferably bounded on either side thereof by upright walls. The channel is preferably open at the bottom. An open channel with upright walls can be provided easily on the bottom of the bodywork. Via such a construction even existing vehicles can be provided with an aerodynamic bodywork according to the invention.

The channel preferably has a plane-symmetrical form relative to a plane running parallel to the travel direction of the vehicle and extending vertically through the centre of the vehicle. By giving the channel a symmetrical form an equal lateral and downward pressure is generated on either side of the vehicle in neutral position of the control element, enabling a stable and predictable forward movement. A symmetrical channel has the further advantage that, in addition to lateral forces, a braking force can also be generated by closing the channel symmetrically and thus disrupting the airflow in symmetrical manner. The vehicle is hereby capable of less streamlined forward movement and will thereby encounter a higher air resistance (the so-called air-brake).

The control element is preferably mounted rotatably around a substantially vertical shaft. The control element can be controlled by the rotation around the vertical shaft. Such a control is easy to realize.

The outlet preferably comprises at least one opening at the rear side of the vehicle and the inlet comprises two inlet openings in opposite sides of the bodywork. These openings allow a control of the airflow through the channel more at the rear side of the vehicle. A more precise control can hereby be obtained.

The outlet openings at the side and the inlet openings at the side are preferably placed relative to each other such that an uncontrolled airflow flows at least partially out of the outlet opening and subsequently into the inlet opening. An uncontrolled airflow is understood to mean an airflow which flows when none of the control elements prevent air from flowing into or out of a branch of the channel, and/or in neutral position of the control elements. Such a connection between outlet and inlet has been found in simulations and tests to result in a high aerodynamic stability and controllability. By allowing air which leaves the outlet to flow back into an inlet this air does not remain definitively on the outside of the bodywork, and this air will have no appreciable effect on the airflow on the outside of the bodywork.

The inlet openings at the side preferably each comprise a further control element which can at least partially close the inlet openings. Air can hereby be prevented from flowing through the channel and thereby be forced to flow along the bodywork. The flow along the bodywork applies a force to the bodywork which changes when the flow along the bodywork changes. A force acting on the bodywork can thus be influenced with the further control elements.

The openings in the side are preferably located in a central zone of the vehicle, more preferably at the position of the centre of gravity of the vehicle. By having an airflow flow out on the side wall in a central zone of the vehicle, the lateral force resulting from the outflow will exert no appreciable torque on the vehicle. This increases the stability of the vehicle.

The channel preferably extends substantially upward as seen from the front side to the rear side of the vehicle in order to also generate a downforce as well as a lateral force. A downforce is exerted on the bodywork by forcing the airflow upward. This downforce provides for extra stability of the vehicle by increasing the contact pressure on the ground surface. For reasons elucidated above the creation of a downforce is not the first preference according to the invention for increasing cornering speeds. Lateral forces (generated according to the invention) can however be combined with additional downforces in order to obtain a whole which enables an even higher cornering speed. A part of the centrifugal force (when taking a bend) is counteracted here by the lateral forces and a part is absorbed by the friction resulting from the contact pressure of the tyres on the ground surface, this contact pressure being higher due to the generated downward pressure.

The vehicle is preferably a land vehicle, more preferably a car. Alternatively, the vehicle is for instance a vessel.

The invention will now be further described on the basis of an exemplary embodiment shown in the drawing.

In the drawing:
figure 1 shows a vehicle with bodywork according to a preferred embodiment of the invention;
figure 2 shows a cross-section of the vehicle wherein the control elements are in neutral position;
figure 3 shows a cross-section of the vehicle wherein a front control element is in rotated position;
figure 4 shows a cross-section of the vehicle wherein a control element on the side is in rotated position;
figure 5 shows a cross-section of the vehicle wherein a rear control element is in rotated position;
figure 6 shows a cross-section of a simplified embodiment of the invention; and
figure 7 shows a cross-section of a further embodiment of the invention.

The same or similar elements are designated in the drawing with the same reference numeral.

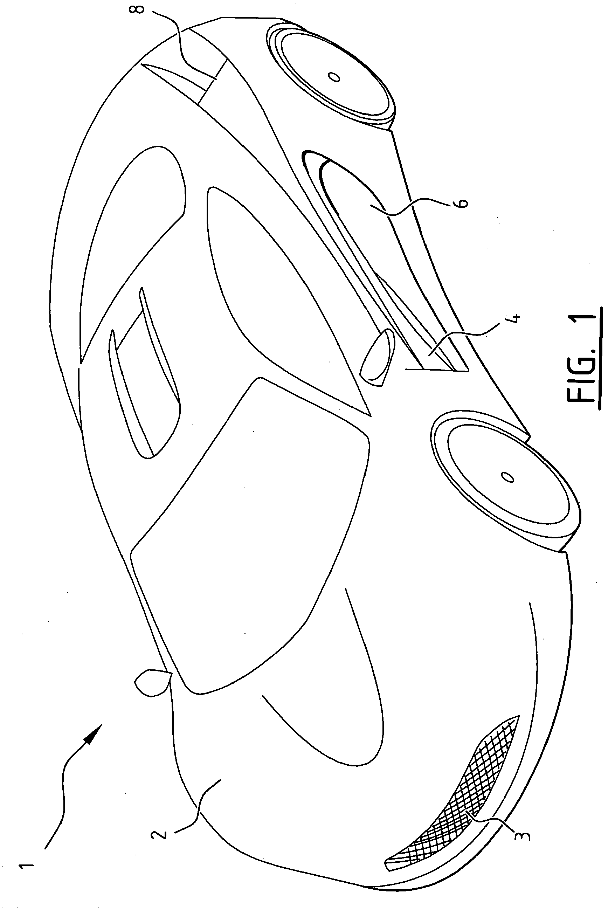

Figure 1 shows a car 1 with a bodywork 2 which forms the outer surfaces of the car. The details of the invention and the principles at work therein will be explained in the further description on the basis of this car 1. It will however be apparent to the skilled person that these details and principles can likewise be applied to any of the following (not an exhaustive list): truck, motorbike, vessel, aircraft, train and bus. The invention will be particularly applicable to vehicles intended to reach a speed higher than 50 km/h, preferably higher than 100 km/h, more preferably higher than 150 km/h, most preferably higher than 200 km/h.

Car 1 has on the front side an inlet opening 3 where air can flow into a channel. The inlet opening is preferably formed as one central opening 3 in an upright front part of the bodywork, as shown in figure 1. The inlet opening can however comprise a plurality of openings which are distributed at the front side of the bodywork (not shown). Inlet openings could thus be provided on the front wheel housings. The inlet opening or inlet openings are preferably formed schematically relative to a plane which extends vertically and in the travel direction of the car and which runs through the geometrical centre of the car, further referred to in the description as the plane of symmetry.

An outlet opening 4, 5 is formed in the side wall of the bodywork on either side of car 1. Outlet opening 4, 5 is connected via a channel 10 to inlet opening 3 so that an airflow can flow from inlet opening 3 through the channel and as far as outlet opening 4, 5. Outlet opening 4, 5 is placed in the side wall in a central zone of the vehicle, preferably between the front and the rear wheel housings of the vehicle.

A further inlet opening 6, 7 is also formed on either side of car 1 at the position of and in the travel direction behind outlet opening 4, 5. These inlet openings 6 and 7 are positioned relative to outlet openings 4 and 5 such that an airflow, when it is not deflected by a control element, flows out of outlet opening 4, 5 and at least partially, but preferably substantially wholly, into inlet opening 6, 7.

An outlet opening 8 is provided on the rear side of car 1. This outlet opening 8 can be formed so that it runs out onto a diffuser (not shown) which is formed centrally at the rear on the underside of the car. As shown in figure 1, outlet opening 8 can be formed more toward the upper side of the car at the rear side. Two outlet openings 8 are provided at the rear side in the drawings. Outlet opening 8 is connected via a channel 10 to an inlet, preferably to inlet openings 6, 7 situated on the side of the car.

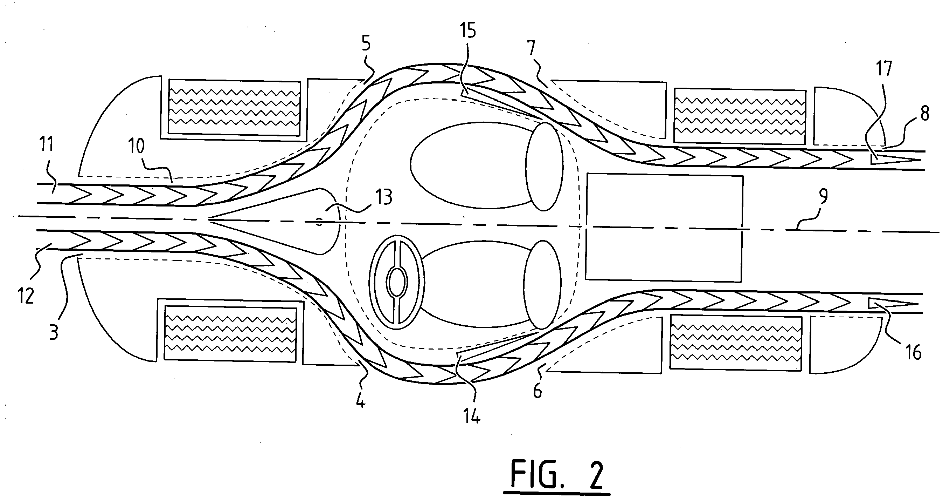

Figure 2 shows a schematic cross-sectional view of a car. The schematic view shows inlet opening 3 on the front side of the car, which inlet opening 3 is connected via channel 10 to outlet openings 4 and 5 in the side wall of the car. Channel 10 extends further from inlet openings 6 and 7 to outlet opening 8 on the rear side of the car. Figure 2 further shows a line of symmetry 9 extending in the travel direction and lying in the plane of symmetry.

When the car moves forward at a given speed, a relative movement between the car and the ambient air is created with a speed equal to the given forward speed. The forward movement of the car will ensure that, taking the car as reference point, an airflow will flow around the car and through channel 10. The airflow through channel 10 is designated in the figures with numerals 11 and 12.

Channel 10 is shown in plan view in figures 2-5 in order to describe the effects of the airflow in the transverse direction of the car. It will be apparent that this plan view by no means forms a limitation and that channel 10, as seen from front to rear of the car, can run upward so as to thus create a downforce on the car.

Channel 10 is bounded by upright side walls, shown in the figures with a broken line. According to a first embodiment, channel 10 is open at the bottom. This first embodiment is suitable for application on existing vehicle designs. According to a second embodiment, the channel is closed at the bottom and thereby wholly incorporated into the bodywork of the vehicle so as to extend through the bodywork from inlet to outlet. According to a third embodiment, the channel is open at the top. This third embodiment can be applied in vehicles specially designed for racing.

Channel 10 is formed as a branched channel which, from a central branch running from the front inlet opening 3 and in the direction of travel, is divided into two branches, each extending in the direction of a side of the car. The branching is formed in a central part of the car. The branching is preferably formed in a zone between the front wheel housings. Channels 10 preferably curve around either side of a cockpit of the car and then curve toward each other again behind the cockpit.

Control elements are arranged in channel 10. The figures show a control element 13 placed centrally in channel 10, two control elements 14 and 15 positioned at the location of inlet openings 6 and 7 in the side of the car and two control elements 16 and 17 positioned at the location of outlet opening 8 on the rear side of the car.

The control elements are preferably formed as valves having an aerodynamic form so as to create minimal turbulence. The valves extend substantially vertically and are rotatable around a substantially vertical axis so as to thus enable deflection of an airflow in the horizontal plane.

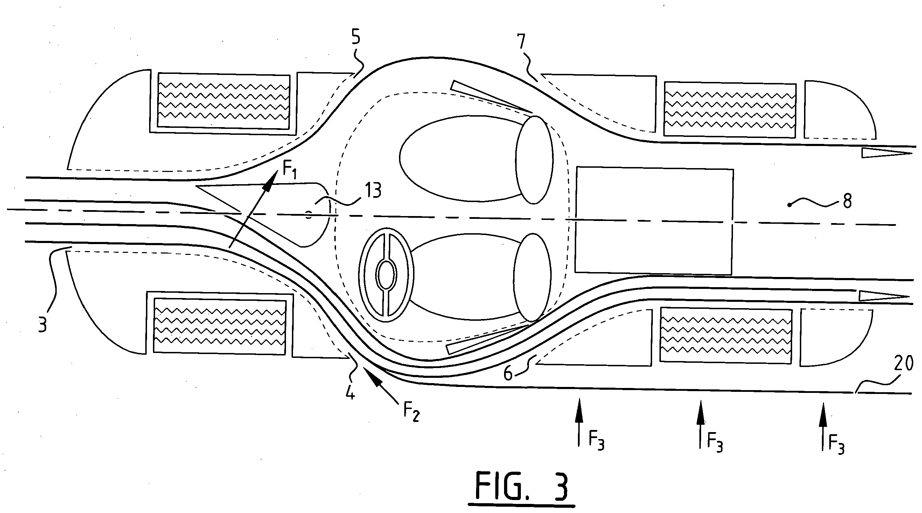

The central control element 13 is formed as distributing valve at the position of a branching in channel 10. This control element 13 is provided for the purpose of distributing the airflow coming from central opening 3 in the direction of outlet openings 4 and 5. Control element 13 can here force the airflow to flow more or wholly in the direction of one of the two outlet openings 4 and 5. The effect hereof is explained with reference to figure 3, in which the central control element 13 is rotated around its vertical axis to allow more air to flow to outlet opening 4 in the left-hand side of the car.

Because the airflow does not collide symmetrically with control element 13 but collides more with one side of control element 13, the control element is subjected to a force F1. This force F1 comprises a component in the travel direction which counteracts the forward movement of the car, and comprises a component in transverse direction which pushes the car to the right.

The airflow will further flow out of the car on the left-hand side through outlet opening 4, whereby a thrust F2 is created at the outlet. This thrust F2 lies in line with the outflow direction and will therefore have a component in the direction of forward movement and will have a component in transverse direction which pushes the car to the right. The thrust will theoretically be exerted at the outflow opening and in practice will be exerted on the plane in the vehicle lying in line with the outflow opening, being the cockpit wall and the control element.

Because a greater quantity of air flows out of outlet opening 4, only a part of this air will flow in at inlet opening 6. Another part will flow via the outside of the bodywork along the rear side of the car (see flow line 20). This outflowing air influences the laminar airflow flowing around the car so that the air speed adjacently of the left and rear sides of the bodywork becomes slower. This effect has been observed via wind tunnel simulations. The air flows unimpeded on the right-hand side of the car. This results in a difference in speed between the airflow on the left-hand side and the airflow on the right-hand side of the car, at least on the rear side of the car. According to Bernoulli's principle a pressure difference will occur, wherein the location where the air flows more rapidly has a lower pressure than the location where the air flows more slowly. In figure 3 the air flows more slowly on the left-hand side than the air on the right-hand side. As a result of this difference in speed a force F3 will occur, this being a transverse force which pushes the car to the right.

The forces F1 F2 and F3 all have at least a component in the transverse direction, more particularly a component which pushes the car to the right. Such a position of the central control element would counteract at least a part of the centrifugal force when the car takes a corner to the right. The tyres will hereby have to counteract less centrifugal force, which will have a positive effect in respect of wear and cornering speed.

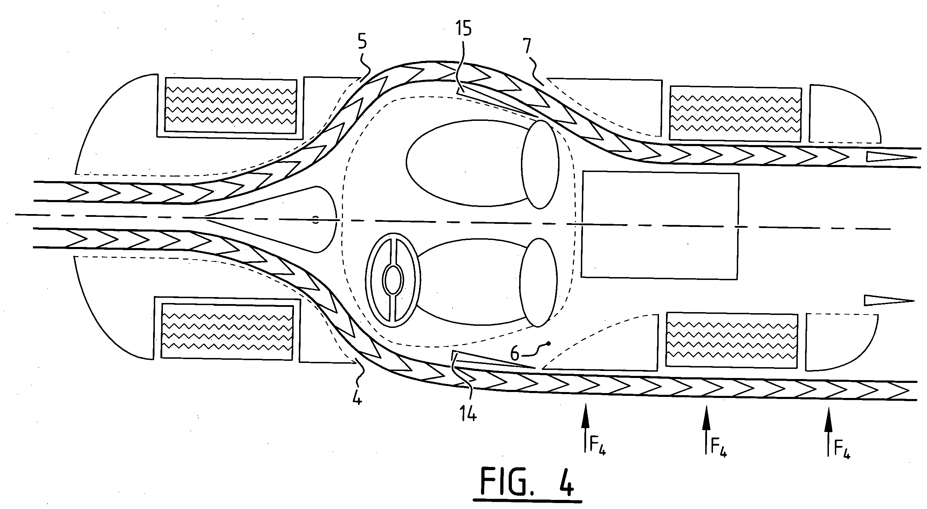

Two control elements 14 and 15, positioned at the location of inlet openings 6 and 7 in the side of the car, are formed as closing valve for the purpose of wholly or partially closing these inlet openings. Figure 4 shows the effects of closing one of the two inlet openings, and shows the airflow when inlet opening 6 on the left-hand side of the vehicle is closed and inlet opening 7 on the right-hand side of the vehicle is open.

Because inlet opening 6 is closed, the air leaving outlet opening 4 cannot flow into inlet opening 6. This air is hereby forced to flow along the car on the outside of the bodywork. This will disrupt the airflow flowing around the car, whereby this airflow will be slowed. This effect has been observed in wind tunnel simulations. Similarly to force F3 as described with reference to figure 3, a force F4 will be created which pushes the car to the right.

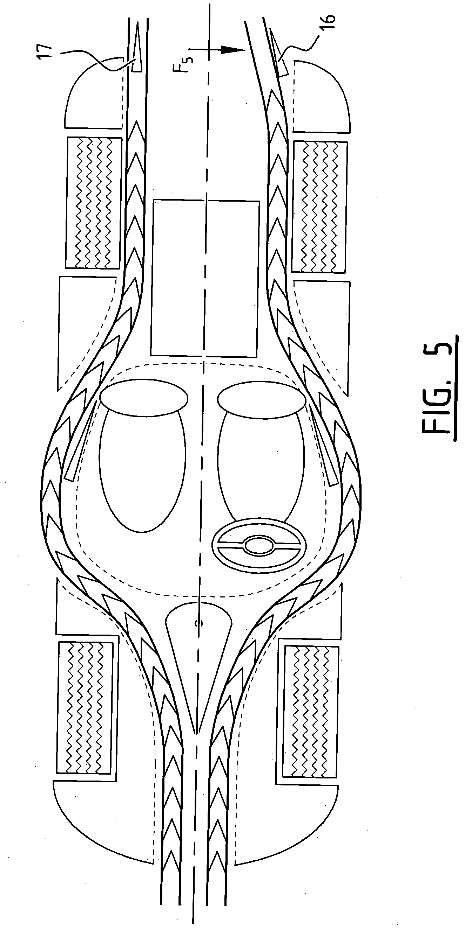

Figure 5 shows how a control element 16 positioned at the location of outlet opening 8 on the rear side of the car is controlled, and what the effect thereof is. Control element 16 functions similarly to the rudder of an aircraft. A force F5 is applied to control element 16 in opposite direction to the direction in which the airflow is deflected. In figure 5 the airflow is deflected to the right-hand side of the car, whereby a force F5 which pushes the car to the left is exerted on the control element.

In addition to exerting a transverse force on the car, the forces F1, F2, F3, F4 and F5 will also exert a torque on the car when the force vector does not pass through the centre of gravity of the car. Although the forces created by operating the different control elements can lie substantially in the same direction, the direction of torque will differ depending on the position where the forces are exerted. Forces F1 and F2 will thus cause a torque in the clockwise direction. F3 and F4 will in turn cause a counter-clockwise torque. When the forces F1 F2, F3 and F4 are exerted together a torque on the car could be minimized, which improves stability. The forces F1, F2, F3, F4 and F5 could also be chosen specifically for the purpose of providing a torque which is advantageous for the desired performance of the vehicle, for instance intentional drift or slight oversteer when steering into the bend.

Both lateral force and a torque can be controlled in respect of magnitude and direction by operating the control elements, this resulting in an enormous design freedom. This freedom is preferably achieved by providing at least two control elements positioned at different locations in the channel. The one control element is preferably positioned here on another side of the centre of gravity of the car than the other control element.

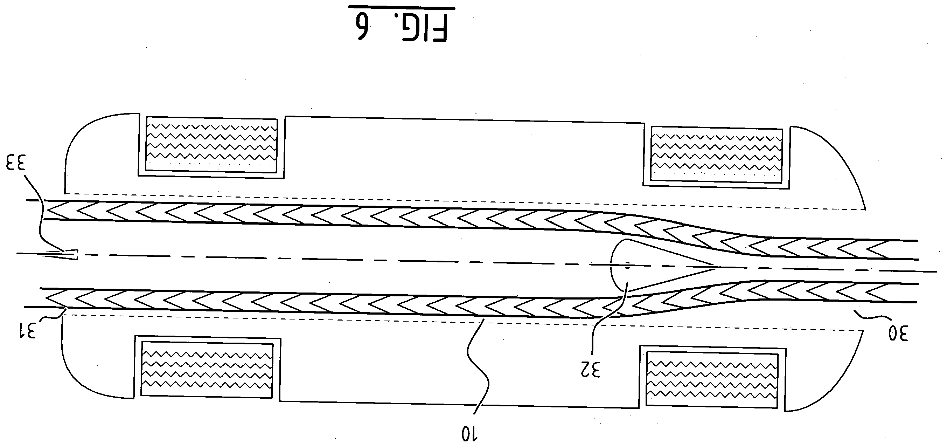

Figure 6 shows a car with bodywork in which a channel 10 extends from an inlet opening 30 in the front side of the bodywork to an outlet opening 31 in the rear side of the bodywork. A first control element 32 is rotatably mounted in the channel in order to deflect the airflow in channel 10. A further control element 33 is mounted in a rearmost portion of channel 10 in order to deflect the airflow in the channel. An embodiment in which only one control element 32 or 33 is mounted in channel 10 also provides options for generating a transverse force on the vehicle, and thereby likewise falls within the invention.

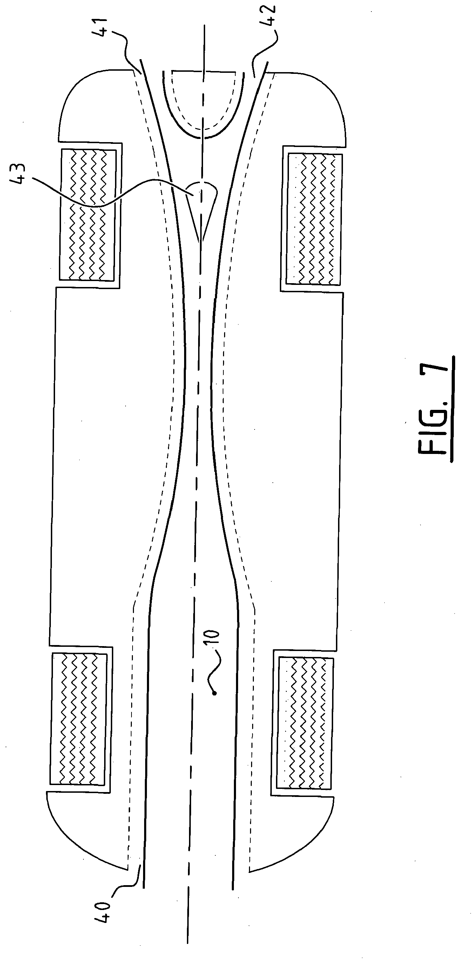

Figure 7 shows a car with bodywork in which a branched channel 10 extends from an inlet opening 40 in the front side of the bodywork to two outlet openings 41 and 42, each arranged at the rear side of the bodywork. A control element 43 is provided at the position of the branching of channel 10 in order to force more or all of the air to flow through one of the two branches. A transverse force is hereby generated on the vehicle.

It will be apparent from the above description that different combinations can be made of inlet openings and outlet openings, of branches and of control elements at different locations in the channel. This freedom in making combinations provides the skilled person with the option of adjusting the action of forces on a vehicle to the specific requirements and objectives of this vehicle. The invention is not therefore limited to a specific form of channel, placing of inlet or outlet, or position of control element.

## Claims

1. Vehicle (1) with a bodywork (2), wherein a channel (10) is formed in the bodywork which extends from an inlet (3, 40) to an outlet (4, 5, 8), wherein at least one control element (13, 43) is arranged movably in said channel and is adapted to force an airflow (11, 12) flowing through the channel to flow asymmetrically through the channel in order to thus generate a lateral force (F) on the vehicle, **characterized in that** the channel is branched, wherein the outlet comprises two outlet openings (4, 5, 41, 42), wherein the control element (13, 43) is provided in order to force the airflow to flow more through one of the two outlet openings than through the other of the two outlet openings.

2. Vehicle (1) as claimed in claim 1, with a front side, wherein the inlet comprises at least one opening (3) at the front side, preferably in a front side of the bodywork (2).

3. Vehicle (1) as claimed in claim 1 or 2, wherein the two outlet openings (4, 5) are arranged in opposite sides of the bodywork (2).

4. Vehicle as claimed in any of the foregoing claims, wherein the control element is arranged at the position of a branching in the channel.

5. Vehicle (1) as claimed in any of the foregoing claims, wherein the channel (10) is bounded on either side thereof by upright walls.

6. Vehicle (1) as claimed in any of the foregoing claims, wherein the channel (10) is open at the bottom.

7. Vehicle (1) as claimed in any of the foregoing claims, wherein the channel (10) has a substantially plane-symmetrical form relative to a plane running parallel to the travel direction of the vehicle and extending vertically through the centre of the vehicle.

8. Vehicle (1) as claimed in any of the foregoing claims, wherein the control element (13, 43) is mounted rotatably around a substantially vertical axis.

9. Vehicle (1) as claimed in any of the foregoing claims, with a rear side, wherein the outlet (8) comprises at least one opening at the rear side.

10. Vehicle (1) as claimed in any of the foregoing claims, wherein the inlet (6, 7) comprises two inlet openings in opposite sides of the bodywork.

11. Vehicle (1) as claimed in claim 3 and claim 10, wherein the outlet openings (4, 5) at the side and the inlet openings (6, 7) at the side are placed relative to each other such that an uncontrolled airflow flows at least partially out of the outlet opening and subsequently into the inlet opening.

12. Vehicle (1) as claimed in claim 10 or 11, wherein the inlet openings (6, 7) at the side each comprise a further control element (14, 15) which can at least partially close the inlet openings.

13. Vehicle (1) as claimed in claim 3 or 10 to 12, wherein the openings in the side (4, 5, 6, 7) are located in a central zone of the vehicle, more preferably at the position of the centre of gravity of the vehicle.

14. Vehicle (1) as claimed in any of the foregoing claims, wherein the channel (10) extends substantially upward as seen from the front side to the rear side of the vehicle in order to also generate a downforce as well as a lateral force.

15. Vehicle (1) as claimed in any of the foregoing claims, wherein the control element(13, 43) is formed as valve, which valve is provided for the purpose of closing at least one third of the cross-sectional area of the channel (10).

## Patentansprüche

1. Fahrzeug (1) mit einem Aufbau (2), wobei ein Kanal (10) in dem Aufbau ausgebildet ist, der sich von einem Einlass (3, 40) zu einem Auslass (4, 5, 8) erstreckt, wobei wenigstens ein Steuerelement (13, 43) beweglich in dem Kanal angeordnet und dazu ausgelegt ist, einen Luftstrom (11, 12), der durch den Kanal strömt, dazu zu zwingen, asymmetrisch durch den Kanal zu strömen, um auf diese Weise eine seitliche Kraft (F) auf das Fahrzeug zu erzeugen, **dadurch gekennzeichnet, dass** der Kanal verzweigt ist, wobei der Auslass zwei Auslass-Öffnungen (4, 5, 41, 42) aufweist, wobei das Steuerelement (13, 43) vorgesehen ist, um den Luftstrom dazu zu zwingen, mehr durch einen der beiden Auslass-Öffnungen zu strömen als durch die andere der beiden Auslass-Öffnungen.

2. Fahrzeug (1) nach Anspruch 1, mit einer Vorderseite, wobei der Einlass wenigstens eine Öffnung (3) an der Vorderseite, vorzugsweise in einer Vorderseite des Aufbaus (2), aufweist.

3. Fahrzeug (1) nach Anspruch 1 oder 2, wobei die beiden Auslass-Öffnungen (4, 5) in gegenüberliegenden Seiten des Aufbaus (2) angeordnet sind.

4. Fahrzeug nach einem der vorstehenden Ansprüche, wobei das Steuerelement an der Stelle einer Abzweigung in dem Kanal angeordnet ist.

5. Fahrzeug (1) nach einem der vorstehenden Ansprüche, wobei der Kanal (10) an jeder seiner Seiten durch aufrechte Wände begrenzt ist.

6. Fahrzeug (1) nach einem der vorstehenden Ansprüche, wobei der Kanal (10) am Boden offen ist.

7. Fahrzeug (1) nach einem der vorstehenden Ansprüche, wobei der Kanal (10) eine im Wesentlichen plansymmetrische Form relativ zu einer Ebene hat, die parallel zur Fahrtrichtung des Fahrzeugs verläuft und sich vertikal durch das Zentrum des Fahrzeugs erstreckt.

8. Fahrzeug (1) nach einem der vorstehenden Ansprüche, wobei das Steuerelement (13, 43) um eine im Wesentlichen vertikale Achse drehbar montiert ist.

9. Fahrzeug (1) nach einem der vorstehenden Ansprüche, mit einer Rückseite, wobei der Auslass (8) wenigstens eine Öffnung an der Rückseite aufweist.

10. Fahrzeug (1) nach einem der vorstehenden Ansprüche, wobei der Einlass (6, 7) wenigstens zwei Einlass-Öffnungen in gegenüberliegenden Seiten des Aufbaus aufweist.

11. Fahrzeug (1) nach Anspruch 3 und Anspruch 10, wobei die Auslass-Öffnungen (4, 5) an der Seite und die Einlass-Öffnungen (6, 7) an der Seite derart relativ zueinander angeordnet sind, dass ein unkontrollierter Luftstrom zumindest teilweise aus der Auslass-Öffnung strömt und darauffolgend in die Einlass-Öffnung strömt.

12. Fahrzeug (1) nach Anspruch 10 oder 11, wobei die Einlass-Öffnungen (6, 7) an der Seite jeweils ein weiteres Steuerelement (14, 15) aufweisen, das die Einlass-Öffnungen zumindest teilweise schließen kann.

13. Fahrzeug (1) nach Anspruch 3 oder 10 bis 12, wobei die Öffnungen in der Seite (4, 5, 6, 7) in einer zentralen Zone des Fahrzeugs liegen, vorzugsweise an der Stelle des Schwerpunkts des Fahrzeugs.

14. Fahrzeug (1) nach einem der vorstehenden Ansprüche, wobei sich der Kanal (10) von der Vorderseite zur Rückseite des Fahrzeugs gesehen im Wesentlichen nach oben erstreckt, um eine nach unten gerichtete Kraft zu erzeugen, wie auch eine seitliche Kraft.

15. Fahrzeug (1) nach einem der vorstehenden Ansprüche, wobei das Steuerelement (13, 43) als Ventil ausgestaltet ist, wobei das Ventil zu dem Zwecke vorgesehen ist, wenigstens ein Drittel des Querschnittsbereichs des Kanals (10) zu verschließen.

## Revendications

1. Véhicule (1) avec une caisse (2), où un canal (10) est formé dans la caisse qui s'étend à partir d'une entrée (3, 40) jusqu'à une sortie (4, 5, 8), dans lequel au moins un élément de commande (13, 43) est agencé de manière mobile dans ledit canal et est adapté pour forcer l'air (11, 12) à s'écouler dans le canal, de manière asymétrique afin de générer ainsi une force latérale (F) sur le véhicule, **caractérisé en ce que** le canal est bifurqué, dans lequel la sortie comprend deux ouvertures de sortie (4, 5, 41, 42), dans lequel l'élément de commande (13, 43) est prévu afin de forcer l'air à s'écouler davantage à travers l'une des deux ouvertures de sortie qu'à travers l'autre.

2. Véhicule (1) selon la revendication 1, avec un côté avant, dans lequel l'entrée comprend au moins une ouverture (3) au niveau du côté avant, de préférence sur un côté avant de la caisse (2).

3. Véhicule (1) selon la revendication 1 ou 2, dans lequel les deux ouvertures de sortie (4, 5) sont agencées dans les côtés opposés de la caisse (2).

4. Véhicule selon l'une quelconque des revendications précédentes, dans lequel l'élément de commande est agencé au niveau d'une bifurcation dans le canal.

5. Véhicule (1) selon l'une quelconque des revendications précédentes, dans lequel le canal (10) est délimité, sur l'un ou l'autre de ses côtés, par des parois droites.

6. Véhicule (1) selon l'une quelconque des revendications précédentes, dans lequel le canal (10) est ouvert au fond.

7. Véhicule (1) selon l'une quelconque des revendications précédentes, dans lequel le canal (10) a une forme sensiblement symétrique en plan par rapport à un plan s'étendant parallèlement à la direction de déplacement du véhicule et s'étendant verticalement à travers le centre du véhicule.

8. Véhicule (1) selon l'une quelconque des revendications précédentes, dans lequel l'élément de commande (13, 43) est monté en rotation autour d'un axe sensiblement vertical.

9. Véhicule (1) selon l'une quelconque des revendications précédentes, avec un côté arrière, dans lequel la sortie (8) comprend au moins une ouverture au niveau du côté arrière.

10. Véhicule (1) selon l'une quelconque des revendications précédentes, dans lequel l'entrée (6, 7) comprend deux ouvertures d'entrée sur les côtés opposés de la caisse.

11. Véhicule (1) selon la revendication 3 et la revendication 10, dans lequel les ouvertures de sortie (4, 5) sur le côté et les ouvertures d'entrée (6, 7) sur le côté, sont placées les unes par rapport aux autres de sorte qu'un écoulement d'air non contrôlé s'écoule au moins partiellement par l'ouverture de sortie et s'écoule ensuite par l'ouverture d'entrée.

12. Véhicule (1) selon la revendication 10 ou 11, dans lequel les ouvertures d'entrée (6, 7) sur le côté, comprennent chacune un autre élément de commande (14, 15), qui peut fermer au moins partiellement les ouvertures d'entrée.

13. Véhicule (1) selon les revendications 3 ou les revendications 10 à 12, dans lequel les ouvertures (4, 5, 6, 7) sur le côté, sont positionnées dans une zone centrale du véhicule, de préférence au niveau du centre de gravité du véhicule.

14. Véhicule (1) selon l'une quelconque des revendications précédentes, dans lequel le canal (10) s'étend sensiblement vers le haut, du côté avant au côté arrière du véhicule comme observé afin de générer également une force descendante et une force latérale.

15. Véhicule (1) selon l'une quelconque des revendications précédentes, dans lequel l'élément de commande (13, 43) est formé comme une valve, laquelle valve est prévue afin de fermer au moins un tiers de la surface transversale du canal (10).
